(19) Europäisches Patentamt
European Patent Office
Office européen des brevets

(11) **EP 4 738 715 A1**

(12) **EUROPEAN PATENT APPLICATION**

(43) Date of publication:
**06.05.2026 Bulletin 2026/19**

(21) Application number: **25207440.6**

(22) Date of filing: **08.10.2025**

(51) International Patent Classification (IPC):
***H04B 1/525*** (2015.01)   ***H04W 72/12*** (2023.01)

(52) Cooperative Patent Classification (CPC):
**H04B 1/525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.11.2024   FI 20246299**

(71) Applicant: **Nokia Technologies Oy**
**02610 Espoo (FI)**

(72) Inventors:
• **DHERE, Amol**
  **Gistrup (DK)**
• **NIELSEN, Kim**
  **Storvorde (DK)**

(74) Representative: **Nokia EPO representatives**
**Nokia Technologies Oy**
**Karakaari 7**
**02610 Espoo (FI)**

(54) **APPARATUS AND METHOD FOR SELF-INTERFERENCE MITIGATION IN BLUETOOTH SYSTEMS**

(57)    Embodiments of the present disclosure relate to an apparatus, method, and non-transitory computer readable medium for self-interference mitigation in bluetooth (BT) systems. The apparatus comprises a cellular modem for a cellular communication; a first controller for a general purpose; and a second controller for a BT communication. The first controller receives information about self-interference from the cellular modem, the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication. The first controller determines BT channels affected by the one or more transmissions of the apparatus in the frequency bands of the cellular communication based on the information on self-interference. The first controller transmits controller, information about the determined BT channels to the second controller and the second controller is configured to control the BT communication with a slave BT device based on the information about the determined BT channels.

FIG. 8

**Description**

**FIELD**

Embodiments of the present disclosure generally relate to the field of wireless communication, and in particular to devices, methods, and a non-transitory computer readable medium for self-interference mitigation in bluetooth (BT) systems.

**BACKGROUND**

In modern wireless communication devices such as user equipment (UE), the device can simultaneously manage multiple wireless connections to achieve efficient data transmission and enhanced network performance. Although the wireless connection to the cellular network can provide high-throughput data services, the realization of such high throughput relies on the collaborative operation of multiple wireless links. Consequently, technologies such as carrier aggregation (CA) and dual connectivity (DC) are widely implemented to optimize the utilization of wireless signals, thereby meeting users' demands for high-speed data transmission.

When UE is operated with more than one transceiver active at different spectrum allocations, typically happening in the implementation of technologies such as carrier aggregation or dual connectivity, the UE's radio hardware is potentially subject to cause self-interference, which refers to the UE's transmitter having spectrum content, harmonic response, or harmonic products that create interference inside an active receive frequency band of the same UE.

Currently, as one of the popular short range communication technologies, BT is widely used by users, and the BT data connection with nearby devices is continually increasing. The BT communication typically operates within an industrial, scientific, and medical (ISM) frequency band. The ISM band is radio frequencies reserved for unlicensed communication, typically ranging from 2.4 GHz to 2.483 GHz. Due to its open nature, the ISM band is widely used for various wireless communication technologies, including bluetooth, Wi-Fi, and other short-range wireless devices. Since the BT connection may operate concurrently with multiple cellular network connections in the same UE, cellular frequency bands, such as fifth generation (5G) or sixth generation (6G) frequency bands might generate interferences affecting bluetooth signals, causing self-interference in bluetooth systems.

However, issues related to the self-interference in the bluetooth systems are not sufficiently handled but still to be further addressed.

SUMMARY

In general, example embodiments of the present disclosure provide devices, methods and a computer readable medium for self-interference mitigation in bluetooth (BT) systems.

In a first aspect, there is provided an apparatus. The apparatus comprises a cellular modem for a cellular communication, a first controller for a general purpose, and a second controller for a bluetooth, BT, communication. The first controller is configured to: receive information about self-interference from the cellular modem, wherein the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication. The first controller is further configured to determine BT channels affected by the one or more transmissions of the apparatus in the frequency bands of the cellular communication based on the information about self-interference. The first controller is also configured to transmit information about the determined BT channels to the second controller, wherein the second controller is configured to control the BT communication with a slave BT device based on the information about the determined BT channels.

In some embodiments, the second controller is further caused to estimate channel quality between the apparatus and the slave BT device based on only a part of the determined BT channels; and the controlling, by the second controller, the BT transmission based on the information on the determined BT channels comprises: scheduling the second controller's reception from the slave BT device on the determined BT channels when the estimated channel quality is above a predetermined threshold.

In some embodiments, the predetermined threshold is indicated by a self-interference level per BT channel; the self-interference level per BT channel is determined, by the first controller, based on information on a maximum self-interference level when the apparatus is transmitting with the maximum output power on transmission in cellular bands; and the self-interference level per BT channel is transmitted, by the first controller, to the second controller when a number of determined BT channels is higher than a predetermined minimum number for BT channels marked as unknown.

In some embodiments, the self-interference level per BT channel is transmitted by a first custom command in BT host controller interface, HCI; and the first custom command has a predetermined opcode with group filed, OGF, value and an operation code command, OCF, field for providing information on self-interference level per BT channel.

In some embodiments, the controlling, by the second controller, the BT transmission based on the information on the determined BT channels comprises: scheduling the second controller's transmission to the slave BT device on any of BT channels while scheduling transmission from the slave BT device on the BT channels marked as bad are restricted

In some embodiments, the first controller is further configured to: transmit, a permission command to the second controller, wherein the permission command allows transmission only from a BT master device of the apparatus in any of: BT channels marked as bad; or BT channels identified in the permission command, comprising remaining BT channels in the determined BT channels other than BT channels marked as bad.

In some embodiments, the permission command comprises a second custom command in BT HCI, and wherein the second custom command has a predetermined opcode with group filed, OGF, value and an operation code command, OCF, field for permission of transmission.

In some embodiments, the information on the determined BT channels affected by the transmission of the apparatus comprises information on BT channels marked as bad with an amount not greater than a predetermined minimum number for BT channels marked as unknown.

In some embodiments, the information on the determined BT channels affected by the active bands is transmitted to the second controller through an HCI_Set_AFH_Host_Channel_Classification command provided by an HCI protocol.

In some embodiments, the apparatus has a frequency band combination table stored in the cellular modem, and the band combination table comprises band combinations of supported cellular communication system creating IMD products or harmonic products inside an operation frequency range of BT communication and information indicating a maximum self-interference level when the apparatus is transmitting with a maximum output power on the transmission of the apparatus in cellular bands.

In some embodiments, the apparatus has an equation for calculating IMD or harmonic products of operation band combinations stored therein, and the IMD or harmonic products may be calculated based on the one or more frequency ranges of the one or more transmission of the apparatus in the frequency bands of the cellular communication and central frequencies thereof.

In some embodiments, the apparatus is further caused to transmit, by the first controller, a frame configuration information on cellular communication to the second controller, wherein the frame configuration information comprises one or more of frame duration, timings of uplink, timings of downlink and guard periods, wherein the frame configuration information is transmitted to the second controller by a HCI_Set_External_Frame_Configuration command provided by an HCI protocol.

In some embodiments, the apparatus is user equipment (UE) or is implemented in user equipment.

In a second aspect, there is provided a method implemented by an apparatus, wherein the apparatus comprises: a cellular modem for a cellular communication; a first controller for a general purpose; and a second controller for a bluetooth, BT, communication. The method comprises receiving, by the first controller, information about self-interference from the cellular modem, wherein the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication. The method further comprises determining, by the first controller, BT channels affected by the one or more transmissions of the apparatus in the frequency bands of the cellular communication based on the information on self-interference. The method also comprises transmitting, by the first controller, controller, information about the determined BT channels to the second controller, wherein the second controller is configured to control the BT communication with a slave BT device based on the information about the determined BT channels.

In a third aspect, there is provided a non-transitory computer readable medium. The non-transitory computer readable medium having program instructions stored thereon. The program instructions, when executed by an apparatus, causing the apparatus at least to perform the method according to the second aspect above.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some embodiments will now be described with reference to the accompanying drawings, in which:

FIG. 1 illustrates an example network environment in which some embodiments of the present disclosure can be implemented;

FIG. 2 illustrates an example diagram for coupling paths for self-interference in UE.

FIGs. 3A to 3D illustrates example diagram of four types of self-interference;

FIG. 4 illustrates an example structure and function diagram of bluetooth master controller according to some embodiments of the present disclosure;

FIG. 5 illustrates an example signaling chart of an example process according to some embodiments of the present disclosure;

FIG. 6 illustrates an example diagram of calculation for potential intermodulation distortion product according to some embodiments of the present disclosure;

FIG. 7 illustrates an example diagram of adaptive frequency hopping (AFH) algorithm within the ISM band;

FIG. 8 illustrates a flowchart of a method implemented at a terminal device according to some embodiments of the present disclosure; and

FIG. 9 illustrates a simplified block diagram of an apparatus that is suitable for implementing embodiments of the present disclosure.

Throughout the drawings, the same or similar reference numerals represent the same or similar elements.

DETAILED DESCRIPTION

Principles of the present disclosure will now be described with reference to some embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an example embodiment," "an embodiment," "some embodiments," and the like indicate that the embodiment(s) described may include a particular feature, structure, or characteristic, but it is not necessary that every embodiment includes the particular feature, structure, or characteristic. Moreover, such phrases do not necessarily refer to the same embodiment(s). Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" or the like may be used herein to describe various elements, these elements should not be limited by these terms. These terms are only used to distinguish one element from another element. For example, a first element could also be termed as a second element, and similarly, a second element could also be termed as a first element, without departing from the scope of embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used herein, the term "communication network" refers to a network following any suitable communication standards, such as, 5G NR, Long Term Evolution (LTE), LTE-Advanced (LTE-A), Wideband Code Division Multiple Access (WCDMA), High-Speed Packet Access (HSPA), Narrow Band Internet of Things (NB-IoT), and so on. Further, the communications between a terminal device and a network device in the communication network may be performed according to any suitable generation communication protocols, including but not limited to, the first generation (1G), the second generation (2G), 2.5G, 2.75G, the third generation (3G), the fourth generation (4G), 4.5G, the 5G communication protocols, the 6G communication protocols and/or any other protocols either currently known or to be developed in the future. Embodiments of the present disclosure may be applied in various communication systems. Given the rapid development in communications, there will also be future type communication technologies and systems in which the present disclosure may be embodied. It should not be seen as limiting the scope of the present disclosure to only the aforementioned systems.

As used herein, the term "network device" generally refers to a node in a communication network via which a terminal device can access the communication network and receive services therefrom. The network device may refer to a base station (BS) or an access point (AP), for example, a node B (NodeB or NB), a radio access network (RAN) node, an evolved NodeB (eNodeB or eNB), a NR NB (also referred to as a gNB), a Remote Radio Unit (RRU), a radio header (RH), an infrastructure device for a V2X (vehicle-to-everything) communication, a transmission and reception point (TRP), a reception point (RP), a remote radio head (RRH), a relay, an integrated access and backhaul (IAB) node, a low power node such as a femto BS, a pico BS, and so forth, depending on the applied terminology and technology.

As used herein, the term "terminal device" generally refers to any end device that may be capable of wireless communications. By way of example rather than a limitation, a terminal device may also be referred to as a communication device, user equipment (UE), an end user device, a subscriber station (SS), an unmanned aerial vehicle (UAV), a portable subscriber station, a mobile station (MS), or an access terminal (AT). The terminal device may include, but is not limited to, a mobile phone, a cellular phone, a smart phone, a voice over IP (VoIP) phone, a wireless local loop phone, a tablet, a wearable terminal device, a personal digital assistant (PDA), a portable computer, a desktop computer, an image capture terminal device such as a digital camera, a gaming terminal device, a music storage and playback appliance, a vehicle-mounted wireless terminal device, a wireless endpoint, a mobile station, laptop-embedded equipment (LEE), laptop-mounted equipment (LME), a USB dongle, a smart device, wireless customer-premises equipment (CPE), an Internet of Things (IoT) device, a watch or other wearable, a head-mounted display (HMD), a vehicle, a drone, a medical device (for example, a remote surgery device), an industrial device (for example, a robot and/or other wireless devices operating in an industrial and/or an automated processing chain contexts), a consumer electronics device, a device operating on commercial and/or industrial wireless networks, and the like. In the following description, the terms: "terminal device," "communication device," "terminal," "user equipment" and "UE," may be used interchangeably.

As used herein, the term "resource," "transmission resource," "resource block," "physical resource block," "uplink resource," or "downlink resource" may refer to any resource, for example a resource in time domain, a resource in frequency domain, a resource in space domain, a resource in code domain, or any other resource enabling a communication, and the like, used for performing a communication between a terminal device and a network device or between terminal devices. In the following, a resource in both frequency and time domain will be used as an example of a transmission resource for describing some embodiments of the present disclosure. It is noted that embodiments of the present disclosure equally apply to other resources in other domains.

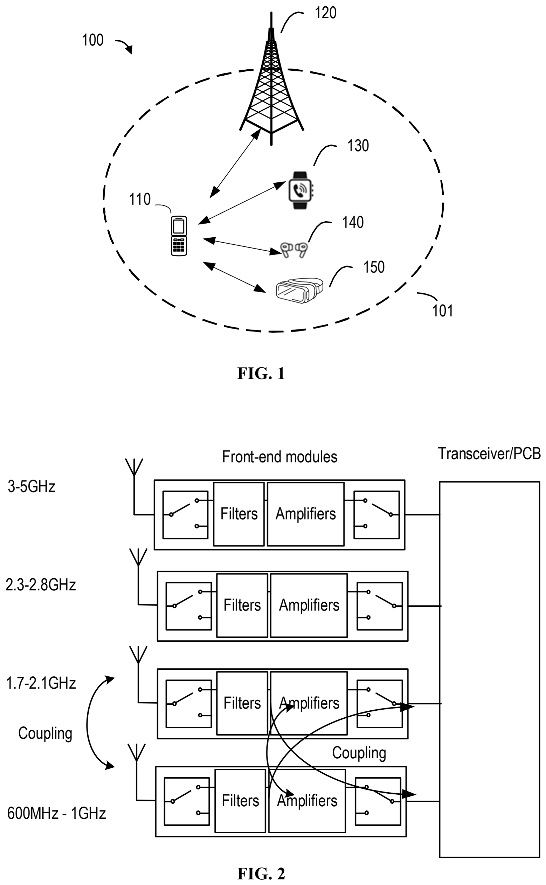

FIG.1 illustrates an example network environment 100 in which example embodiments of the present disclosure may be implemented. The environment 100, which may be a part of a communication network, comprises terminal devices and network devices.

As illustrated in FIG.1, the communication network 100 may comprise a terminal device 110 (hereinafter may also be referred to as user equipment 110 or UE 110). The communication network 100 may further comprise a network device 120. The network device 120 may manage a cell 101. The terminal device 110 and the network device 120 may communicate data and control information to each other in the coverage of the cell. A link from the network device 120 to the terminal device 110 is referred to as a downlink (DL), while a link from the terminal device 110 to the network device 120 is referred to as an uplink (UL).

As illustrated in FIG.1, the terminal device 110 may further be connected with near devices through BT connections. The near devices include any smart devices supporting the BT communication, such as smart watch 130, smart earphone 140, smart glasses 150, or any other suitable device. Multiple near devices can connect simultaneously to the terminal device 110 and exchange data using the BT communication.

In embodiments of the present disclosure, the terminal device 110 may be configured to perform the method implemented at a terminal device according to some embodiments of the present disclosure.

It is to be understood that the number of network devices and terminal devices is only for the purpose of illustration without suggesting any limitations. The system 100 may include any suitable number of network devices and terminal devices adapted for implementing embodiments of the present disclosure. Although not shown, it would be appreciated that one or more terminal devices may be located in the environment 100.

The communications in the communication network 100 may conform to any suitable standards including, but not limited to, global system for mobile communications (GSM), LTE, LTE-Evolution, LTE-advanced (LTE-A), wideband code division multiple access (WCDMA), code division multiple access (CDMA), GSM EDGE radio access network (GERAN), machine type communication (MTC) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols and the sixth generation (6G) communication protocols.

When the UE activates multiple transceivers across different spectrum allocations, as commonly observed in carrier aggregation or dual connectivity scenarios, the radio hardware of the UE may be potentially subject to cause self-interference. Such self-interference occurs when emissions from the UE's transmitter, including spectrum content, harmonic responses, or harmonic products, intrude into an active receive frequency band of the same UE, thereby degrading the UE's receiving performance. The self-interference is typically caused by signal coupling either via the printed circuit board (PCB) or through the antennas, and the impact of the self-interference is dependent on the specific design of these components.

FIG. 2 illustrates possible coupling paths within the same UE for causing the self-interference, as demonstrated using the example frequency ranges. As illustrated in Fig. 2, a signal channel with a frequency band of 1.7 to 2.1GHz and a signal channel with a frequency band of 600MHz to 1GHz may have the coupling of transmitted signal to the receiver with each other, due to spectrum content, harmonic responses, or harmonic products.

The self-interference in the UE can be attributed to several mechanisms within a cellular system. The mechanism may include uplink (UL) harmonics, harmonic mixing, and cross band, intermodulation distortion.

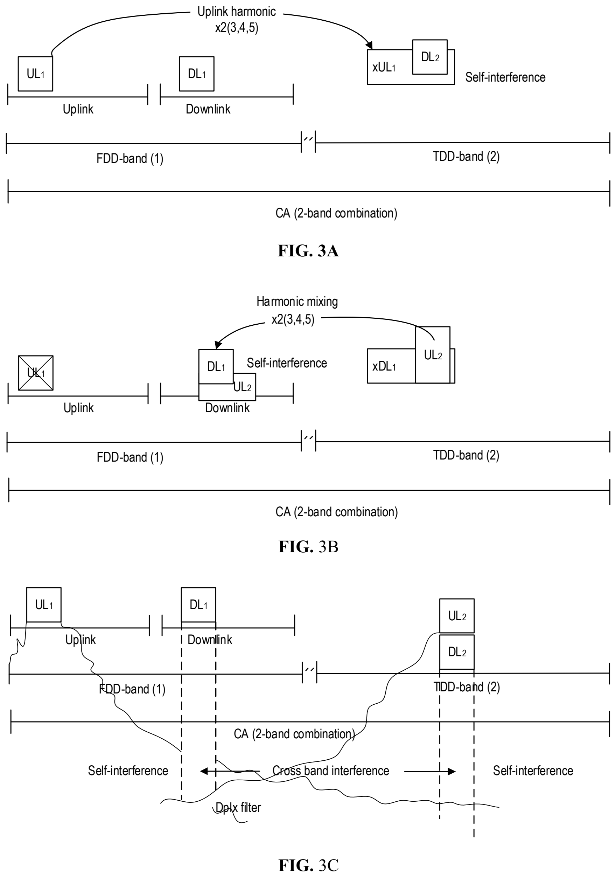

The UL harmonics refers to the interference caused by the harmonic of uplink transmission falling into other downlink component carrier. As illustrated in FIG. 3A, in a case of 2 CA (2-band combination) with 1 uplink, such type of self-interferences occurs when the harmonic (xUL1) of the uplink transmission UL1 falls inside the other DL component carrier bandwidth (DL2) at the fundamental carrier frequency.

The harmonic mixing refers to the interference caused by mixing of harmonic and fundamental carrier frequencies of uplink transmission in DL harmonic of other downlink component carrier. In other words, in the case of 2CA with 1 uplink, such type of self-interferences arises when the combination of the UL fundamental (UL1) or harmonic (xUL1) of the uplink coincides with a DL harmonic (xDL1) of the other DL component as shown in FIG. 3B.

The cross band interference refers to a type of self-interference when the output spectrum of the UL component carrier falls inside the DL component carrier bandwidth. This scenario can be seen as adjacent channel leakage from the transmitter, which is dependent on the non-linear behavior of the power amplifier. As illustrated in FIG. 3C, in 2 CA with 1 uplink & 2CA with 2 or more UL CCs, the uplink transmissions on UL1 and UL2 adjacent channel leakage which cause self-interference with other band RX (DL1).

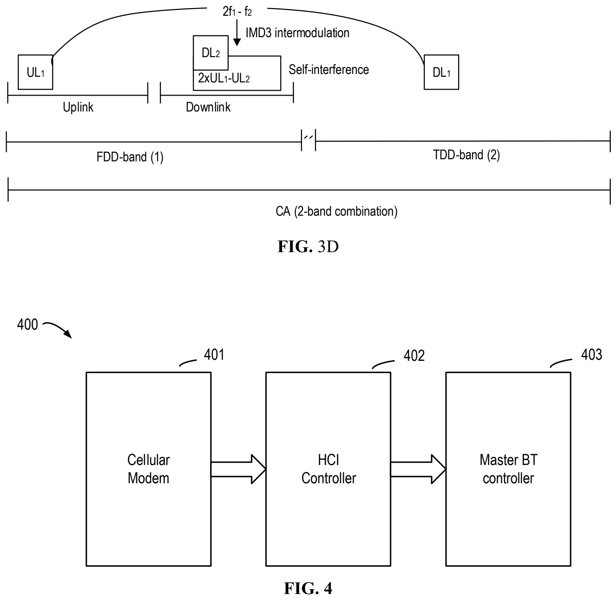

The IMD occurs when two or more UL component carriers mix, and the resultant intermodulation products fall within the DL component carrier bandwidth at the fundamental frequency of the downlink band. Special cases of IMD, including non-contiguous UL carrier aggregation (ULCA) and triple beat scenarios, also contribute to self-interference. As depicted in FIG. 3D, two simultaneous uplinks (fundamental or harmonic, such as 2f1-f2) create a product (intermodulation product) that falls inside the DL component carrier (DL1) of the second band or third band (3 CA DL).

In addition to cellular connectivity using 5G/6G communication protocols, the UE may be connected to other bluetooth devices, such as smart earphones and smart watches. Thus such 5G/6G frequency bands might generate interferences affecting the bluetooth signals, which causes the self-interference in the bluetooth systems. Especially, the UE that operates in 5G/6G CA mode together with active BT connectivity is more likely to cause the self-interference issues into the ISM band.

Currently, various co-existence solutions have been proposed to enable the bluetooth controllers to co-exist with mobile wireless communication, co-located within the same device. These solutions may include:

I: Host Controller Interface for Adaptive Frequency Hopping (AFH) channel classification,

II: Mobile Wireless Standard (MWS) co-existence signaling, and

III: Synchronization of bluetooth operations with the clock/frame structure of other radio technologies.

The above techniques aim to mitigate the effect of co-located interference occurring between the bluetooth radio and another modem, which may operate within the ISM band or in licensed bands surrounding the ISM band. The above techniques are directed to the co-located interference generally characterized as over-the-air interference, typically stemming from inadequate isolation between the antennas of the bluetooth and the other mobile radios.

However, it is noticed that the interference stemming from the cellular 5G/6G band's transmission on the ISM band's reception need not be transmitted over-the-air and may solely affect the bluetooth reception of the specific device experiencing the self-interference across the affected channels. However, the existing mechanisms, which rely on measurements conducted by the bluetooth controller itself, typically result in the exclusion of a substantial number of channels within the ISM band.

Furthermore, although the bluetooth reception is often feasible when the received signal strength indicator (RSSI) level of the bluetooth received signal surpasses the level of the self-interference, the level of the self-interference-predominantly a function of harmonic order-can vary dramatically with mere decibel alterations in the transmit power. Consequently, the current methods for updating the inventory of viable and non-viable channels, which are based on observed interference levels, are inadequately responsive to the rapid fluctuations in interference levels. Therefore, there is a need for a better solution of self-interference mitigation in the UE with the bluetooth systems.

In view of the above discussions, embodiments of the present disclosure provide an improved solution of self-interference mitigation in bluetooth systems. In one aspect of the solution of the present disclosure, an apparatus comprises a cellular modem for a cellular communication; a first controller for a general purpose; and a second controller for a bluetooth, BT, communication. The first controller receives information about self-interference from the cellular modem, wherein the information about self-interference comprises one or more frequency ranges of one or more transmission of the apparatus in frequency bands of the cellular communication and one or both of one or more related frequency ranges of a potential intermodulation distortion (IMD) product or a related potential harmonic product of the one or more transmissions of the apparatus affecting the BT communication. The first controller determines BT channels affected by the one or more transmissions of the apparatus in the frequency bands of the cellular communication based on the information about self-interference. The first controller transmits information about the determined BT channels to the second controller. The first controller may be, for example, a host controller; the second controller, for example, may be a master BT controller, which controls the BT communication with a slave BT device based on the information about the determined BT channels.

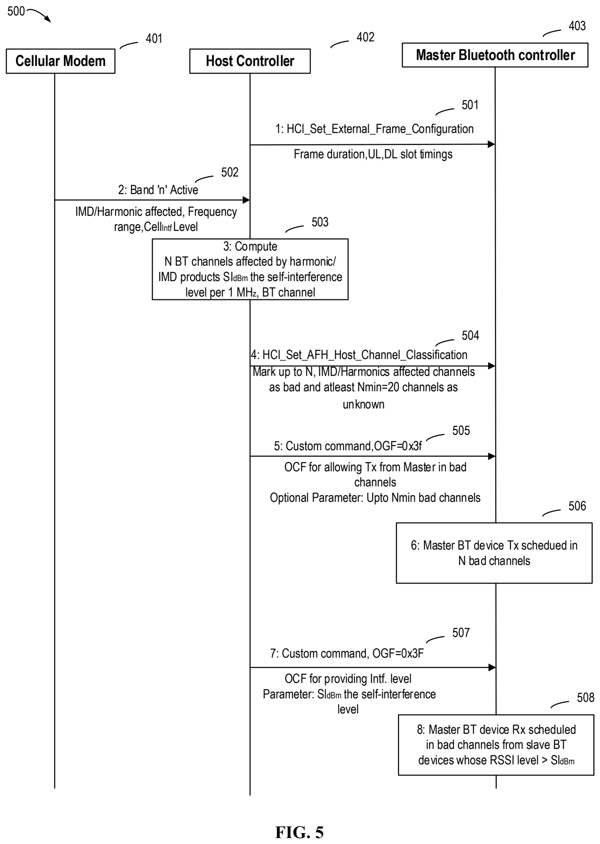

In this way, the first controller may monitor and evaluate the level of self-interference concerning the harmonic product or the IMD product in real time, and the second controller can flexibly adjust the use of the BT channels when the self-interference is recognized, thus avoiding the impact of self-interference on the BT transmission, improving robustness of the BT transmission. Hereinafter, for illustrative purposes, principles and implementations of the embodiments of the present disclosure will be described in detail with reference to FIGs. 5 - 9.

**Example Method**

In embodiments of the present disclosure, the method of self-interference mitigation in the BT systems may be implemented in the UE as a master bluetooth device. bluetooth special interest group (SIG), as the specification group for BT standards, specifies the bluetooth host controller interface (HCI) interface for a host processor to control and configure a BT controller. As shown in FIG. 4, the UE may function as a master bluetooth device and may comprise a cellular modem for a cellular communication, a HCI controller, and a master BT controller. By means of the HCI, the host controller enables peripheral systems to interact with the bluetooth system. In embodiments of the present disclosure, we may use parts of the HCI controller, which will be described hereinafter. However, it is to be noted that the present disclosure is not limited thereto, and the solution proposed herein may also be implemented based on any other suitable system architecture.

FIG. 5 illustrates an example signaling chart of an example process 500 according to some embodiments of the present disclosure. In the example process 500, when the cellular modem 401 has detected a radio configuration with self-interference impact in the ISM band and informs the first controller such as the host controller 402, then the host controller 402 may transmit 501 a frame configuration to the second controller such as the master BT controller 403 to provide the cellular 5G/6G frame structure with the timing of uplink, downlink and guard periods.

As mentioned, the in-device co-existence studies has some solutions for cross-band interference problems, however, it is noticed that there are aspects of cellular carrier aggregation that are not considered for generating in-device co-existence issue, especially the mechanisms of self-interference caused by uplink harmonic, harmonic mixing and intermodulation distortion purely from CA in the cellular bands into the ISM band. Some examples, which show that non-obvious bands of operation create issues in ISM band are given as follows:

- ISM (2.4GHz - 2.483GHz) with n5(824MHz - 849MHz)

    ○ 3 * 825MHz (n5 UL) = 2.475GHz (ISM DL) -> UL3/DL1 uplink harmonic issue
    ○ Interference level estimate - 86dBm/5MHz from similar UL3/DL1 in a third generation partnership project (3GPP) TS 38.101-1

- ISM (2.4GHz - 2.483GHz) with n78(3.3GHz - 3.8GHz)

    ○ 3 * 2.45GHz (ISM DL) = 2 * 3.675GHz (n78 UL) -> UL2/DL3 harmonic mixing issue
    ○ Interference level estimate - 86dBm/5MHz from similar UL2/DL3 in 3GPP TS 38.101-1

- ISM (2.4GHz - 2.483GHz) with n78(3.3GHz - 3.8GHz) and n5(824MHz-849MHz)

    ○ 3315MHz (n78 UL) - 845MHz (n5 UL) = 2470MHz (ISM DL) -> IMD2 CA_n5A-n78A into ISM band
    ○ Interference estimate -70dBm/5MHz from similar IMD2 in 3GPP TS 38.101-1

To improve the robustness of the bluetooth system, embodiments of the present disclosure propose using the existing HCI interface to control the adaptive frequency hopping (AFH) channels and making the UE cellular Modem calculate the position of the products in the frequency domain created by the uplink configuration of the cellular modem.

In embodiments of the present disclosure, UE may implement one or more tables for all supported band combinations in 4G/5G and 6G to contain data of impact into the ISM band. Therefore, whenever a band combination has a product that falls inside the ISM band the UE has the information stored along with the level of self-interference. Preferably, the level of self-interference may have been found in factory production or can be a number that matches existing specifications of 3GPP on similar MSD (maximum sensitivity degradation) cases. The UE may also store for each of these cases the equation that creates the uplink product causing the self-interference. In other words, the UE may have in memory information of CA combination that creates products inside the ISM band and a value that represents the interference level (dBm) including the equation for the calculation of "hit" in the ISM band.

During the cellular operation the UE acts based on messages from the cellular network that configures the UE radio resources. If a band combination that has an impact on the ISM band is configured to the UE, particularly the cellular modem 401 may perform a calculation found in the stored memory using the uplink carrier bandwidth(s) and center frequency. If these create a product inside the ISM band, the UE will use the HCI interface to alert the BT system.

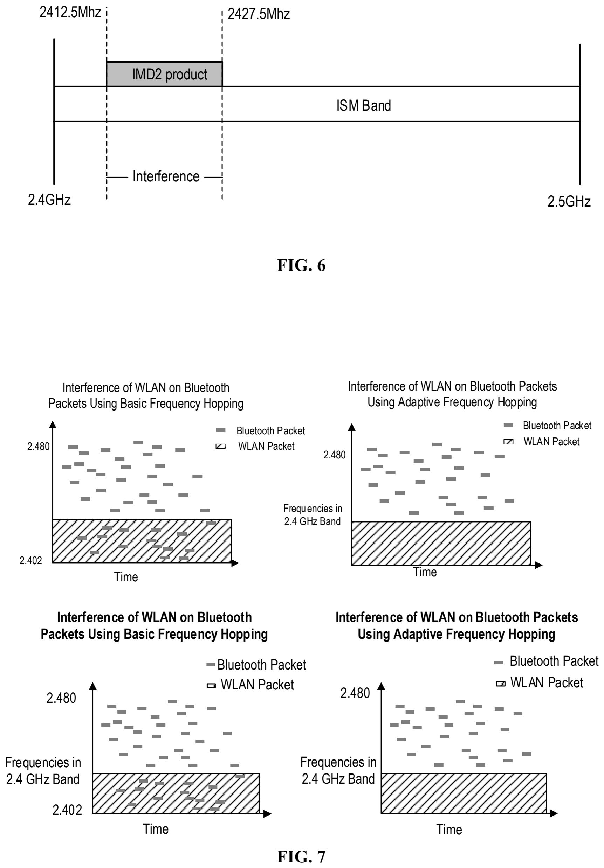

FIG. 6 shows an example of calculation for potential intermodulation distortion product according to some embodiments of the present disclosure, wherein the UE uses bands n3 (uplink 1710MHz - 1785MHz) and n12 (uplink 699MHz - 716MHz). The n3 has an uplink carrier bandwidth of 10MHz while n12 has an uplink carrier bandwidth 5MHz. The allocations of these carrier bandwidths will form a frequency range of the IMD2 product (equation) inside the ISM band:

Center:

$$\text{n3 } 1715\text{MHz} + \text{n12 } 705\text{MHz} = \text{ISM } 2420\text{MHz}$$

Range:

$$2412.5\text{MHz to } 2427.5\text{MHz } (5+10\text{MHz carrier bandwidths})$$

Thus, whenever there is an overlap of the uplink transmissions products into the ISM band, the cellular modem 401 may signal the bluetooth controller for the overlap including the channel classification that matches the overlap information. The AFH can thereby mitigate the self-interference issues similar as Wi-Fi/cellular or other mitigation schemes available to the AFH today.

In some embodiments of the present disclosure, the frame configuration can be transmitted through an HCI command, such as HCI_Set_External_Frame_Configuration command. This command defines the frame structure of the cellular 5G/6G and also the individual uplink/downlink time slots within each frame, and more information thereon may be found in the bluetooth core specification version 5.3, Vol. 4, Part E. By means of the HCI_Set_External_Frame_Configuration command, the information about frame configuration, such as frame duration, UL and DL slot timings, etc., may be provided to the second controller.

The cellular modem 401 transmits 502 information about self-interference to the host controller 402 to inform the host controller 402 about a frequency range becoming active in a certain 5G/6G band. The information about self-interference may also indicate:

- Frequency Range of possible harmonic products in ISM band due to transmissions within the new active frequency range.

- Frequency Range of IMD products in ISM band due to inter modulation between transmissions in new active frequency range and all the other active frequency ranges.

- Level of self-interference $Cell_{Intf}$ in the Frequency Range (optional).

As described above, the UE may have in the memory information of CA combination that creates products inside the ISM band and a value that represents the interference level (dBm), and thus the level of self-interference $Cell_{Intf}$ may be obtained from the information stored in the UE.

As illustrated in FIG. 5, the host controller 402 computes 503, if these harmonics or IMD products land completely or partially in the ISM band:

I: Which approximately 1 MHz BT channels are impacted and their total count N.

II: The maximum self-interference $SI_{dBm}$ which is the level of self-interference ($Cell_{Intf}$) reported from the cellular modem 401 converted into the BT channel bandwidth (optional).

Bluetooth/ European Telecommunications Standards Institute (ETSI) standards have defined up to 80 channels in the 2.4 GHz ISM band with each channel being approximately 1MHz wide. The bluetooth standards have then defined protocol for hopping between these channels for each transmit occasion in a deterministic manner which is called as AFH. The host controller 402 determines, from 80 BT channels, those channels affected by the cellular transmissions based on the information on self-interference and the total number of the affected BT channels are N.

Preferably, the host controller 402 may further determine the self-interference level per BT channel. The maximum self-interference $SI_{dBm}$ may be determined by converting the level of self-interference $Cell_{Intf}$ reported from the Cellular Modem into the BT channel bandwidth. The self-interference level per BT channel may be provided to the master controller 403 to control the BT communication, which will be described hereinafter.

In addition, the host controller 402 can also compute 503 possible harmonic/IMD products within a frequency range in ISM band due to new active frequency range when the cellular modem 401 does not compute and inform about this frequency range, similarly those described with reference to FIG. 6.

Next, the host controller 402 transmits 504 information about the affected BT channels to the master BT controller 403, for example, marking N, when N<60, or exactly 60, when N>60, BT channels impacted by the harmonic/IMD products as 'bad'. The BT specification requires a minimum of Nmin=20 BT channels for reporting which are to be marked as 'unknown'. The information about the affected BT channels can be provided to the master BT controller via the HCI command. The HCI command may be for example HCI_Set_AFH_Host_Channel_Classification command, which marks the channels which the host processor knows to be bad due to possible interference from other simultaneous active radios.

The bluetooth specifications provide the HCI interface which can be run either over USB or UART and is used by a host processor to control the bluetooth controller. This interface also has commands for the host to specify the good and the bad channels based on its own knowledge, as well as to specify the frame structure with uplink, downlink and guard period. More information on the HCI command may be found in bluetooth core specification version 5.3, Vol. 4, Part E. The AFH_host_channel_classification can set good/bad conditions for all the 80 bluetooth channels defined in the ISM band. But a minimum number of channels, Nmin = 20, need to be marked as unknown. The host controller 402 may mark 'bad', all or as many as possible channels, which are inside the affected bandwidth/frequency range of the harmonic/IMD products of the 5G/6G uplink transmissions.

Based on the information about the affected BT channels, the master BT controller 403 may control the BT communication to avoid the self-interference as most as possible.

As described above, the bluetooth/ ETSI standards have defined up to 80 channels and the AFH is adopted. The UE functioning as the master BT device maintains a list of good and bad channels which is shared with other devices and the devices hop over the good channels at each transmit occasion. The determination of channel quality is based on measured interference in each of those channels. This mechanism was designed specifically to target external interference from Wi-Fi devices or other bluetooth devices which also operate in the ISM band.

A bunch of bluetooth devices are paired to a central master device and they form a piconet. The master device updates the list of channels to use, the hopping sequence and also schedules the transmission/reception of each device in the piconet. The piconet can have only 1 master and up to 7 slaves in active mode and allows communication only between the master and the slaves.

FIG. 7 provides illustrations demonstrating the functioning of AFH within the ISM band. As illustrated in FIG. 7, by means of the AFH, the central master device may dynamically select available frequencies in the bluetooth communication system based on real-time interference conditions. In order to minimize the disruption and optimize the signal transmission quality, the master device may not schedule BT transmission on the overlapped frequency ranges with the wireless local area network (WLAN) when the WLAN packets are transmitted.

By means of the AFH, the master BT controller 403 may schedule transmissions from the master BT devices on any of all the BT channels but schedule transmissions from the Slave BT devices only on those good BT channels based on the information about the interference and the affected BT channels.

The host controller 402 may transmit 505 a permission command to the master BT controller 403 to allow transmission from the BT master device of the apparatus in the affected BT channels. In some embodiments, the permission command may be a custom command in HCI commands. For example, the custom command may have opcode with group filed (OGF) of 0x3F, and contain an opcode command field (OCF) that allows transmissions solely from the local bluetooth transmitter. The allowed transmissions may apply to channels that were marked as 'bad' by HCI_Set_AFH_Host_Channel_Classification command, as well as to other channels identified by the command, especially those in the range of BT channels marked as 'unknown' by HCI_Set_AFH_Host_Channel_Classification.

Thus, the master BT controller 403 schedules only its own transmissions in any of the BT channels including those bad channels identified in the above steps, while transmissions from Slave BT devices are not scheduled in the self-interference affected BT channels.

In some embodiments of the present disclosure, if the number of affected bluetooth channels N exceeds the minimum threshold Nmin (20), the host controller 501 may send another custom command to the master BT controller, with the OGF set to 0x3F and the OCF used to convey the current self-interference level (SIdBm). This operation aims to inform the bluetooth controller about the interference situation, allowing it to optimize the scheduling and the reception of bluetooth communications, thereby enhancing communication performance.

The master BT controller 403 takes into account the received signal strength (RSSI) when scheduling the reception of signals from the slave bluetooth devices. Specifically, when the RSSI level of the received signal from the slave device exceeds a set self-interference level (SIdBm), the master controller chooses to receive on channels that were previously marked as 'bad.' In some embodiments of the present disclosure, the RSSI level may be measured based on all of the affected BT channels. In some other embodiments of the present disclosure, the co-located master bluetooth controller may measure the RSSI level of the slave transmissions in only a few affected channels.

Thus, in embodiments of the present disclosure, the master BT controller 403 uses the self-interference level in comparison to transmission opportunities to allow transmissions, when the interference is identified to be self-interference. This means that the master BT controller may be aware that the interference is only present at the master device, and that the slave BT device will have no issue when receiving the transmission from the master bluetooth device. Therefore, if the master bluetooth controller receives signal levels (RSSI) is above the self-interference level, the Master Controller may maintain scheduling the affected channels as good channels.

Thus, in embodiments of the present disclosure, there is provided a solution for keeping up with the rapid changes in interference level caused by the changes in transmit power of the cellular 5G/6G bands and further provided a BT transmission control scheme for the affected BT channels. Instead of not transmitting on any of the affected BT channels, the embodiments allow BT transmission from the master BT device and slave master BT device in some condition, which providing much more BT transmission opportunities, thereby improving the performance of the BT system. For example, IMD and Harmonic products of transmissions in 5G/6G bands located far away from the ISM band will not lead to exclusion of multiple bluetooth channels from the AFH sequence; co-located master bluetooth controller will not miss the opportunity to transmit on the bluetooth channels suffering from self-interference. In addition, co-located master bluetooth controller will not miss the opportunity to receive on the bluetooth channels suffering from self-interference when master bluetooth received signal level is above a self-interference level that normally would block as bad channel.

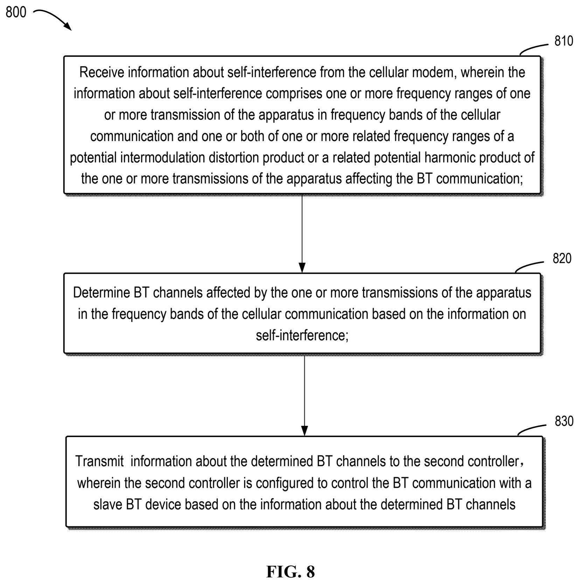

FIG. 8 illustrates a flowchart of a method implemented at a terminal device 110 according to some embodiments of the present disclosure. In some embodiments, the method 800 can be implemented at a communication device, such as the terminal device 110 as shown in FIG.1.

Further, it is to be understood that the method 800 may include additional blocks not shown and/or may omit some blocks as shown, and the scope of the present disclosure is not limited in this regard. For the purpose of discussion, the method 800 will be described from the perspective of the terminal device 110 with reference to FIG.5.

As illustrated in FIG. 8, at block 810, the first controller 501 receive information about self-interference from the cellular modem, the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication.

At block 830, the first controller 501 determine BT channels affected by the one or more transmissions of the apparatus in the frequency bands of the cellular communication based on the information on self-interference.

At block 820, the first controller 501 transmit information about the determined BT channels to the second controller; and wherein the second controller is configured to control the BT communication with a slave BT device based on the information about the determined BT channels.

In some embodiments of the present disclosure, the second controller is further caused to estimate channel quality between the apparatus and the slave BT device based on only a part of the determined BT channels. The controlling, by the second controller, the BT transmission based on the information on the BT channels comprises: scheduling the second controller's reception from the slave BT device on the determined BT channels when the estimated channel quality is above a predetermined threshold.

In some embodiments of the present disclosure, the predetermined threshold is indicated by a self-interference level per BT channel; wherein the self-interference level per BT channel is determined, by the first controller, based on information on a maximum self-interference level when the apparatus is transmitting with the maximum output power on transmission in cellular bands; and wherein the self-interference level per BT channel is transmitted, by the first controller, to the second controller when a number of determined BT channels is higher than a predetermined minimum number for BT channels marked as unknown.

In some embodiments of the present disclosure, the self-interference level per BT channel is transmitted by a first custom command in BT host controller interface, HCI, and wherein the first custom command has a predetermined opcode with group filed, OGF, value and an OCF field for providing information on self-interference level per BT channel.

In some embodiments of the present disclosure, the controlling, by the second controller, the BT transmission based on the information on the BT channels comprises: scheduling the second controller's transmission to the slave BT device on any of BT channels while scheduling transmission from the slave BT device on the BT channels marked as bad are restricted.

In some embodiments of the present disclosure, the first controller is further configured to: transmit, a permission command to the second controller, wherein the permission command allows transmission only from a BT master device of the apparatus in any of: BT channels marked as bad; or BT channels identified in the permission command, comprising remaining BT channels in the determined BT channels other than BT channels marked as bad.

In some embodiments of the present disclosure, the permission command comprises a second custom command in BT HCI, and wherein the second custom command has a predetermined opcode with group filed, OGF, value and an operation code command, OCF, field for permission of transmission.

In some embodiments of the present disclosure, the information on the BT channels affected by the transmission of the apparatus comprises information on BT channels marked as bad with an amount not greater than a predetermined minimum number for marking the BT channels as unknown.

In some embodiments of the present disclosure, the information on the determined BT channels affected by the active bands is transmitted to the second controller through an HCI_Set_AFH_Host_Channel_Classification command provided by an HCI protocol.

In some embodiments of the present disclosure, the apparatus has a frequency band combination table stored in the cellular modem, and wherein the band combination table comprises band combinations of supported cellular communication system creating IMD products or harmonic products inside an operation frequency range of BT communication and information indicating a maximum self-interference level when the apparatus is transmitting with a maximum output power on the transmission of the apparatus in cellular bands.

In some embodiments of the present disclosure, the apparatus has an equation for calculating IMD or harmonic products of operation band combinations stored therein, and
wherein the IMD or harmonic products may be calculated based on the one or more frequency ranges of the one or more transmission of the apparatus in the frequency bands of the cellular communication and central frequencies thereof.

In some embodiments of the present disclosure, the apparatus is further caused to transmit, by the first controller, a frame configuration information on cellular communication to the second controller, wherein the frame configuration information comprises one or more of frame duration, timings of uplink, timings of downlink and guard periods, wherein the frame configuration information is transmitted to the second controller by a HCI_Set_External_Frame_Configuration command provided by an HCI protocol.

In some embodiments of the present disclosure, wherein the apparatus is user equipment (UE) or is implemented in user equipment.

## Example Apparatus

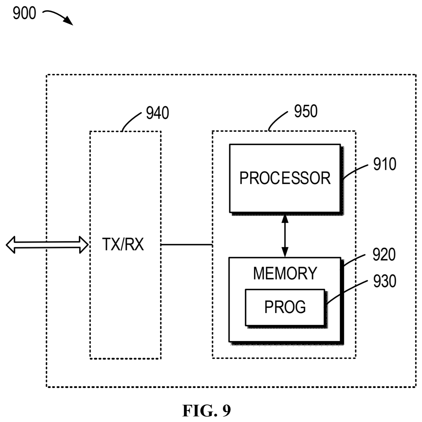

FIG. 9 illustrates a simplified block diagram of a device 900 that is suitable for implementing embodiments of the present disclosure. The device 900 can be considered as a further example implementation of the terminal device 110 or a further example implementation of the network device 120 as shown in FIG.1. Accordingly, the device 900 can be implemented at or as at least a part of the network device 120.

As shown, the device 900 includes a processor 910, a memory 920 coupled to the processor 910, a suitable transmitter (TX) and receiver (RX) 940 coupled to the processor 910, and a communication interface coupled to the TX/RX 940. The memory 920 stores at least a part of a program 930. The TX/RX 940 is for bidirectional communications. The TX/RX 940 has at least one antenna to facilitate communication, though in practice an access node mentioned in this disclosure may have several ones. The communication interface may represent any interface that is necessary for communication with other network elements, such as X2 interface for bidirectional communications between eNBs or gNBs, S1 interface for communication between a mobility management entity (MME)/serving gateway (S-GW) and the eNB or gNB, Un interface for communication between the eNB or gNB and a relay node (RN), or Uu interface for communication between the eNB or gNB and a terminal device.

The program 930 is assumed to include program instructions that, when executed by the associated processor 910, enable the device 900 to operate in accordance with the embodiments of the present disclosure, as discussed herein with reference to FIGS. 1-9. The embodiments herein may be implemented by computer software executable by the processor 910 of the device 900, or by hardware, or by a combination of software and hardware. The processor 910 may be configured to implement various embodiments of the present disclosure. Furthermore, a combination of the processor 910 and memory 920 may form processing means 950 adapted to implement various embodiments of the present disclosure.

The memory 920 may be of any type suitable to the local technical network and may be implemented using any suitable data storage technology, such as a non-transitory computer readable storage medium, semiconductor-based memory devices, magnetic memory devices and systems, optical memory devices and systems, fixed memory and removable memory, as non-limiting examples. While only one memory 920 is shown in the device 900, there may be several physically distinct memory modules in the device 900. The processor 910 may be of any type suitable to the local technical network, and may include one or more of general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

In some embodiments, an apparatus capable of performing the method 800 (for example, the terminal device 110) may comprise means for performing the respective steps of the method 800. The means may be implemented in any suitable form. For example, the means may be implemented in a circuitry or software module. In some embodiments, the means comprises at least one processor and at least one memory including computer program code, the at least one memory and computer program code configured to, with the at least one processor, cause the performance of the method 800.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the process or method as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

**1.** An apparatus, comprising:

    a cellular modem for a cellular communication;

a first controller for a general purpose; and
a second controller for a bluetooth, BT, communication,
wherein the first controller is configured to:

receive information about self-interference from the cellular modem, wherein the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication;

determine BT channels affected by the one or more transmissions of the apparatus in the frequency bands of the cellular communication based on the information about self-interference; and

transmit, information about the determined BT channels to the second controller, wherein the second controller is configured to control the BT communication with a slave BT device based on the information about the determined BT channels.

2. The apparatus of Claim 1, wherein the second controller is further caused to

estimate channel quality between the apparatus and the slave BT device based on only a part of the determined BT channels; and

wherein the controlling, by the second controller, the BT transmission based on the information on the determined BT channels comprises: scheduling the second controller's reception from the slave BT device on the determined BT channels when the estimated channel quality is above a predetermined threshold.

3. The apparatus of Claim 2, wherein the predetermined threshold is indicated by a self-interference level per BT channel;

wherein the self-interference level per BT channel is determined, by the first controller, based on information on a maximum self-interference level when the apparatus is transmitting with the maximum output power on transmission in cellular bands; and

wherein the self-interference level per BT channel is transmitted, by the first controller, to the second controller when a number of determined BT channels is higher than a predetermined minimum number for BT channels marked as unknown.

4. The apparatus of Claim 2 or 3, wherein the self-interference level per BT channel is transmitted by a first custom command in BT host controller interface, HCI, and wherein the first custom command has a predetermined opcode with group filed, OGF, value and an operation code command, OCF, field for providing information on self-interference level per BT channel.

5. The apparatus of any Claims 1 to 4, wherein the controlling, by the second controller, the BT transmission based on the information on the determined BT channels comprises:
scheduling the second controller's transmission to the slave BT device on any of BT channels while scheduling transmission from the slave BT device on the BT channels marked as bad are restricted.

6. The apparatus of any of Claims 1 to 5, wherein the first controller is further configured to:
transmit, a permission command to the second controller, wherein the permission command allows transmission only from a BT master device of the apparatus in any of:

BT channels marked as bad; or
BT channels identified in the permission command, comprising remaining BT channels in the determined BT channels other than BT channels marked as bad.

7. The apparatus of Claim 6, wherein the permission command comprises a second custom command in BT HCI, and wherein the second custom command has a predetermined opcode with group filed, OGF, value and an operation code command, OCF, field for permission of transmission.

8. The apparatus of any of Claims 1 to 7, wherein the information on the determined BT channels affected by the transmission of the apparatus comprises information on BT channels marked as bad with an amount not greater than a predetermined minimum number for BT channels marked as unknown.

9. The apparatus of Claims 1 to 8, wherein the information on the determined BT channels affected by the active bands is transmitted to the second controller through an HCI_Set_AFH_Host_Channel_Classification command provided by an HCI protocol.

10. The apparatus of any of Claims 1 to 9, wherein the apparatus has a frequency band combination table stored in the cellular modem, and
wherein the band combination table comprises band combinations of supported cellular communication system creating intermodulation distortion products or harmonic products inside an operation frequency range of BT communication and information indicating a maximum self-interference level when the apparatus is transmitting with a maximum output power on the transmission of the apparatus in cellular bands.

11. The apparatus of any of Claims 1 to 10, wherein the apparatus has an equation for calculating intermodulation distortion or harmonic products of operation band combinations stored therein, and
wherein the intermodulation distortion or harmonic products may be calculated based on the one or more frequency ranges of the one or more transmission of the apparatus in the frequency bands of the cellular communication and central frequencies thereof.

12. The apparatus of any of Claims 1 to 11, wherein the apparatus is further caused to

transmit, by the first controller, a frame configuration information on cellular communication to the second controller, wherein the frame configuration information comprises one or more of frame duration, timings of uplink, timings of downlink and guard periods,
wherein the frame configuration information is transmitted to the second controller by a HCI_Set_External_Frame_Configuration command provided by an HCI protocol.

13. The apparatus of any of Claims 1 to 12, wherein the apparatus is user equipment (UE) or is implemented in user equipment.

14. A method implemented by an apparatus, wherein the apparatus comprises: a cellular modem for a cellular communication; a first controller for a general purpose; and a second controller for a bluetooth, BT, communication, the method comprising:

receive, by the first controller, information about self-interference from the cellular modem, wherein the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication;
determine, by the first controller, BT channels affected by the one or more transmissions of the apparatus in the frequency bands of the cellular communication based on the information about self-interference; and
transmit, by the first controller, information about the determined BT channels to the second controller, wherein the second controller is configured to control the BT communication with a slave BT device based on the information about the determined BT channels.

15. A computer program comprising instructions, which, when executed by an apparatus, cause the apparatus to perform the method of Claim 14.

**FIG. 1**

**FIG. 2**

Uplink harmonic
x2(3,4,5)

UL₁

xUL₁  DL₂    Self-interference

Uplink          Downlink

FDD-band (1)                    TDD-band (2)

CA (2-band combination)

**FIG. 3A**

Harmonic mixing
x2(3,4,5)

DL₁  Self-interference

UL₁          UL₂          xDL₁  UL₂

Uplink          Downlink

FDD-band (1)                    TDD-band (2)

CA (2-band combination)

**FIG.** 3B

UL₁          DL₁          UL₂

DL₂

Uplink          Downlink          TDD-band (2)

FDD-band (1)

CA (2-band combination)

Self-interference    Cross band interference    Self-interference

Dplx filter

**FIG.** 3C

**FIG.** 3D

**FIG. 4**

500

**Cellular Modem** 401

**Host Controller** 402

**Master Bluetooth controller** 403

501
1: HCI_Set_External_Frame_Configuration

Frame duration,UL,DL slot timings

502
2: Band 'n' Active

IMD/Harmonic affected, Frequency range,Cell_Intf Level

503
3: Compute
N BT channels affected by harmonic/ IMD products $SI_{dBm}$ the self-interference level per 1 MHz, BT channel

504
4: HCI_Set_AFH_Host_Channel_Classification
Mark up to N, IMD/Harmonics affected channels as bad and atleast Nmin=20 channels as unknown

505
5: Custom command,OGF=0x3f
OCF for allowing Tx from Master in bad channels
Optional Parameter: Upto Nmin bad channels

506
6: Master BT device Tx schedued in N bad channels

507
7: Custom command, OGF=0x3F
OCF for providing Intf. level
Parameter: $SI_{dBm}$ the self-interference level

508
8: Master BT device Rx scheduled in bad channels from slave BT devices whose RSSI level > $SI_{dBm}$

**FIG. 5**

2412.5Mhz       2427.5Mhz

IMD2 product

ISM Band

Interference

2.4GHz       2.5GHz

**FIG. 6**

Interference of WLAN on Bluetooth
Packets Using Basic Frequency Hopping

Bluetooth Packet
WLAN Packet

2.480

2.402

Time

Interference of WLAN on Bluetooth Packets
Using Adaptive Frequency Hopping

Bluetooth Packet
WLAN Packet

2.480

Frequencies in
2.4 GHz Band

Time

**Interference of WLAN on Bluetooth
Packets Using Basic Frequency Hopping**

Bluetooth Packet
WLAN Packet

2.480

Frequencies in
2.4 GHz Band

2.402

Time

**Interference of WLAN on Bluetooth Packets
Using Adaptive Frequency Hopping**

Bluetooth Packet
WLAN Packet

2.480

Frequencies in
2.4 GHz Band

Time

**FIG. 7**

800

810

Receive information about self-interference from the cellular modem, wherein the information about self-interference comprises one or more frequency ranges of one or more transmission of the apparatus in frequency bands of the cellular communication and one or both of one or more related frequency ranges of a potential intermodulation distortion product or a related potential harmonic product of the one or more transmissions of the apparatus affecting the BT communication;

820

Determine BT channels affected by the one or more transmissions of the apparatus in the frequency bands of the cellular communication based on the information on self-interference;

830

Transmit information about the determined BT channels to the second controller, wherein the second controller is configured to control the BT communication with a slave BT device based on the information about the determined BT channels

**FIG. 8**

900

940

950

TX/RX

PROCESSOR — 910

MEMORY — 920

930

PROG

**FIG. 9**

**EUROPEAN SEARCH REPORT**

Application Number

EP 25 20 7440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/250871 A1 (KAUKOVUORI JOUNI KRISTIAN [FI] ET AL) 26 September 2013 (2013-09-26) | 1,2,4-15 | INV. H04B1/525 H04W72/12 |
| A | * abstract; figures 1-7 * * paragraph [0002] - paragraph [0125] * ----- | 3 | |
| X | US 2016/302209 A1 (BEHRAVAN ALI [SE] ET AL) 13 October 2016 (2016-10-13) | 1,2,4-15 | |
| A | * abstract; figures 4-8 * * paragraph [0002] - paragraph [0051] * * paragraph [0068] - paragraph [0146] * ----- | 3 | |
| A | US 2018/376425 A1 (ZHAO PENG [CN]) 27 December 2018 (2018-12-27) * abstract; figure 8 * * paragraph [0088] - paragraph [0101] * ----- | 4-9,12 | |

TECHNICAL FIELDS
SEARCHED (IPC)

H04B
H04W

The present search report has been drawn up for all claims

| Place of search | Date of completion of the search | Examiner |
|---|---|---|
| Munich | 20 February 2026 | Galli, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7440

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | | Publication date | Patent family member(s) | | Publication date |
|---|---|---|---|---|---|---|
| US 2013250871 | A1 | | 26-09-2013 | GB | 2500583 A | 02-10-2013 |
| | | | | US | 8526388 B1 | 03-09-2013 |
| | | | | US | 2013250871 A1 | 26-09-2013 |
| US 2016302209 | A1 | | 13-10-2016 | EP | 3219039 A1 | 20-09-2017 |
| | | | | US | 2016302209 A1 | 13-10-2016 |
| | | | | WO | 2016075046 A1 | 19-05-2016 |
| US 2018376425 | A1 | | 27-12-2018 | CN | 107041170 A | 11-08-2017 |
| | | | | EP | 3376782 A1 | 19-09-2018 |
| | | | | JP | 6595112 B2 | 23-10-2019 |
| | | | | JP | 2019506769 A | 07-03-2019 |
| | | | | US | 2018376425 A1 | 27-12-2018 |
| | | | | WO | 2017091994 A1 | 08-06-2017 |

EPO FORM P0459

For more details about this annex : see Official Journal of the European Patent Office, No. 12/82